# EUROPEAN PATENT APPLICATION

(11) **EP 1 326 386 A1**
(43) Date of publication of application: **09.07.2003**
(21) Application number: 02293253.7
(22) Date of filing: 27.12.2002
(51) Int. Cl.: H04L 12/56

(54) **Method and device for communication in a network**

(30) Priority: 08.01.2002 FR 0200177
(71) Applicant: CANON KABUSHIKI KAISHA, Ohta-ku Tokyo 146-8501 (JP)
(72) Inventor: Le Bars, Philippe, 35235 Thorigne-Fouillard (FR)
(74) Representative: Santarelli

(57) **Abstract**

In a communication network comprising at least one access point (AP1) and having a wireless part comprising at least first and second mobile stations (MTa, MTb), when the first and second mobile stations (MTa, MTb) enter into communication through the access point (AP1), the access point (AP1) broadcasts a message of creation of a temporary sub-network, constituted by the first and second mobile stations (MTa, MTb), in which the first mobile station (MTa) is in direct communication with the second mobile station (MTb), said creation message containing an evaluation of the overall quality of service of the communication network before the creation of said sub-network.

## Description

The present invention relates to a method and device for communication in a network.

The invention is in the field of wireless communication networks.

In a wireless local network with centralized architecture, such as a network in accordance with the DECT (Digital Enhanced Cordless Telecommunications) standard, it may be desirable for two mobile terminals to have a confidential communication.

However, in this architecture, all communications pass through the base station. Confidentiality is therefore no longer maintained.

To restore confidentiality, it is known to create a new network with a direct link between the two mobile terminals that are connected. For this, one of the mobile terminals changes attribute and acquires a base station behavior for the duration of the communication.

A feature of this prior art is to apply to wireless networks connected to wired networks, but with a number of mobile stations substantially greater than the number of base stations, all the mobile stations requiring a small part of the throughput available on the wired network.

The known methods are not appropriate for an application to a network in which each mobile station must be able to use a large proportion of the available throughput.

The object of the present invention is to remedy this drawback.

To that end, the present invention provides a method for communication in a telecommunications network comprising at least one access point and having a wireless part comprising at least first and second mobile stations, remarkable in that, when the first and second mobile stations enter into communication through the access point, the access point broadcasts a message of creation of a temporary sub-network, constituted by the first and second mobile stations, in which the first mobile station is in direct communication with the second mobile station, the creation message containing an evaluation of the overall quality of service of the telecommunications network before the creation of the sub-network.

Thus, a temporary sub-network or "child" of the network is created to enable two mobile stations to communicate directly, without passing through an access point, while taking into account the overall quality of service of the network.

Moreover, the load at the access point decreases. It can thus provide better channels or a better bandwidth to future communications. In addition, this enables those channels (four, or even more) which were used by the links between the two mobile stations to be freed.

According to a particular feature, when the first mobile station receives the message of creation of a temporary sub-network, the first mobile station stops transmitting a signaling message intended for the access point and transmits a beacon signal.

According to a particular feature, the method further comprises a step according to which the access point sends a hand-over message to the second mobile station.

According to a particular feature, the first mobile station determines, from the evaluation of the quality of service contained in the sub-network creation message, whether the overall quality of service of the telecommunications network after the creation of the sub-network is better than the overall quality of service of the telecommunications network before the creation of the sub-network.

This makes it possible to know at any time the overall quality of service of the network and to modify its topology only if that modification is in accordance with a better overall quality of service.

With the same object as that indicated above, the present invention also provides a device for communication in a telecommunications network comprising at least one access point and having a wireless part comprising at least first and second mobile stations, remarkable in that the access point comprises means for broadcasting, when the first and second mobile stations enter into communication through the access point, a message of creation of a temporary sub-network, constituted by the first and second mobile stations, in which the first mobile station is in direct communication with the second mobile station, the creation message containing an evaluation of the overall quality of service of the telecommunications network before the creation of the sub-network.

The present invention also relates to a microcontroller, comprising means adapted to implement a communication method as above.

The present invention also relates to a microcontroller, comprising a communication device as above.

The present invention also relates to an FPGA (Field Programmable Gate Array), comprising means adapted to implement a communication method as above.

The present invention also relates to a field programmable gate array or FPGA, comprising a communication device as above.

The present invention also relates to a mobile station in a telecommunications network, comprising means adapted to implement a communication method as above.

The present invention also relates to a mobile station in a telecommunications network, comprising a communication device as above.

The present invention also relates to an access point in a telecommunications network, comprising means adapted to implement a communication method as above.

The present invention also relates to an access point in a telecommunications network, comprising a communication device as above.

The present invention also relates to a telecommunications network, comprising means adapted to implement a communication method as above.

The present invention also relates to a telecommunications network, comprising a communication device as above.

The present invention also relates to a digital signal processing apparatus, comprising means adapted to implement a communication method as above.

The present invention also relates to a digital signal processing apparatus, comprising a communication device as above.

The invention also relates to:
- an information storage means which can be read by a computer or a microprocessor storing instructions of a computer program, making it possible to implement a communication method as above, and
- an information storage means which is removable, partially or totally, which can be read by a computer or a microprocessor storing instructions of a computer program, making it possible to implement a communication method as above.

The invention also relates to a computer program product containing sequences of instructions for implementing a communication method as above.

The particular characteristics and the advantages of the communication device, of the different microcontrollers, of the different FPGA's, of the different mobile stations, of the different access points, of the different telecommunications networks, of the different digital signal processing apparatus, of the different storage means and of the computer program product being similar to those of the communication method according to the invention, they are not repeated here.

Other aspects and advantages of the invention will emerge from a reading of the following detailed description of a particular embodiment, given by way of non-limiting example. The description refers to the accompanying drawings, in which:
- Figure 1 is a diagram of a hybrid telecommunications network example, that is to say comprising a wired part and a wireless part, this network being adapted to implement the present invention;
- Figure 2 is a diagram of the architecture of a mobile station or a base station of the network of Figure 1, adapted to implement the present invention;
- Figure 3 is a diagram of the architecture of a network management module included in a mobile station or base station of the network of Figure 1;
- Figure 4 shows the time-frequency domain used for communication in the network of Figure 1;
- Figures 5 and 6 are flow charts showing the succession of steps carried out respectively by an access point and two mobile stations during implementation of the communication method according to the present invention, in a particular embodiment; and
- Figure 7 shows the use of time windows or "slots" by an access point and two mobile stations implementing a communication method according to the present invention, in a particular embodiment.

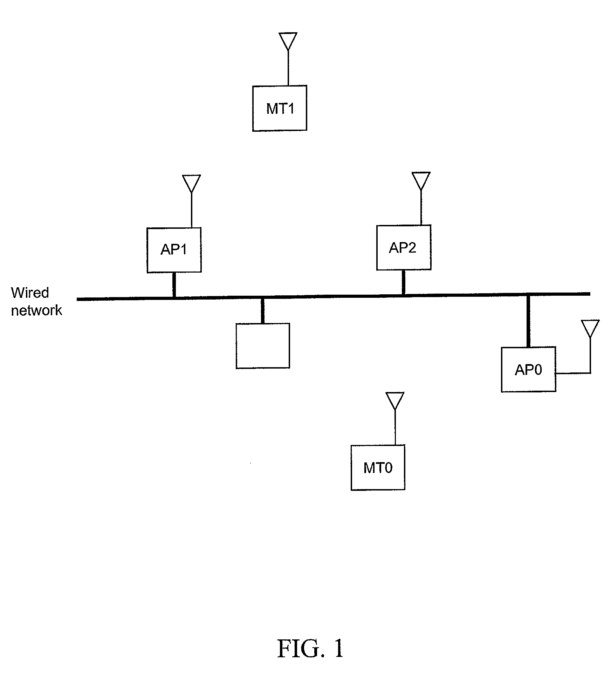

The invention applies to a hybrid network, having a wired part comprising at least one access point AP1 and a wireless part comprising at least first and second mobile stations MTa and MTb. The base stations are connected together by a high throughput wired network, as in Figure 1. Reference signs MT0 and MT1 in the Figure represent mobile terminals and AP0, AP1, AP2 represent access points connected to the same wired network.

It is desirable for the mobile stations to be able to obtain a high percentage of the throughput, in order for example to be able to transmit very high quality video images. This request for high throughput implies the use of a high carrier frequency, such as 2.4 GHz or 5 GHz in order to obtain sufficient bandwidth in a domain already entirely attributed by government-dependent regulatory authorities.

The person skilled in the art knows that the use of microwave frequencies implies a reduction in the range of the transmissions, for a given power at the antenna.

Furthermore, for economic and environmental reasons, as well as to be able to stay within a reasonable size for stations intended for mobility, the power at the antenna must remain relatively low.

Consequently, and in contrast to prior art networks, a limited number of mobile stations as well as an almost equal number of access points will be found in the same locality. The person skilled in the art knows that TDMA-FDMA networks are those which enable the best geographical coverage in the case of a small number of mobile stations for one base station.

Each of the access points of a TDMA-FDMA network can transmit and receive signals in time windows over a certain number of frequencies. It may occur that the use of carrier frequencies that are adjacent in the same time window (in the case of two access points in communication with two mobile stations) will give rise to interference in the signal present in each of the windows.

The implementation of the invention may be carried out equally on a microcontroller or a microprocessor driving a TDMA-FDMA radio module, or through wired logic on an FPGA, this logic driving the TDMA-FDMA radio module.

The operations to perform differ according to whether the implementation is a base station or a mobile terminal. The mobile terminal and the base station differ in that the base station is also a point of access to the wired network, as Figure 1 shows.

For simplicity, it will be considered that each link of the network has two channels, one channel for user data and one channel for information relative to the management of the network, which means that, in the same time window with the same frequency, user information and network management information coexist. The messages relative to the system considered here all use the network management channel. This information is called beacon information if it contains information relative to the whole of the network, and signaling information if it relates to the terminal only.

The beacon and signaling information can be formatted by an error detection system, for example by concatenation of a CRC (Cyclic Redundancy Check) with the data.

The duplex transmission is ensured by the use of a certain number of time windows for the communications of the mobile terminal to the base station and the same number of windows for the communications of the base station to the mobile terminal, but this choice is non-limiting, it being possible to extend the invention to networks that are not symmetric.

The communications from base station to base station use the wired network, since all base stations are also access points here.

The access points are provided with a random number generator, well known to the person skilled in the art.

The access points or AP's, like the mobile terminals or MT's are provided with timers of which the implementation is obvious to the person skilled in the art.

The invention is concerned with processing the communications from a mobile terminal to a mobile terminal (MT to MT type links), by attempting systematically to create a new topology of the network, in order to leave a maximum of bandwidth available for the mobile terminals connecting themselves to the wired network through the access points (MT on AP type links). This creation of a new topology is only possible if all the mobile terminals and access points forming the network benefit from an improvement in the quality of service.

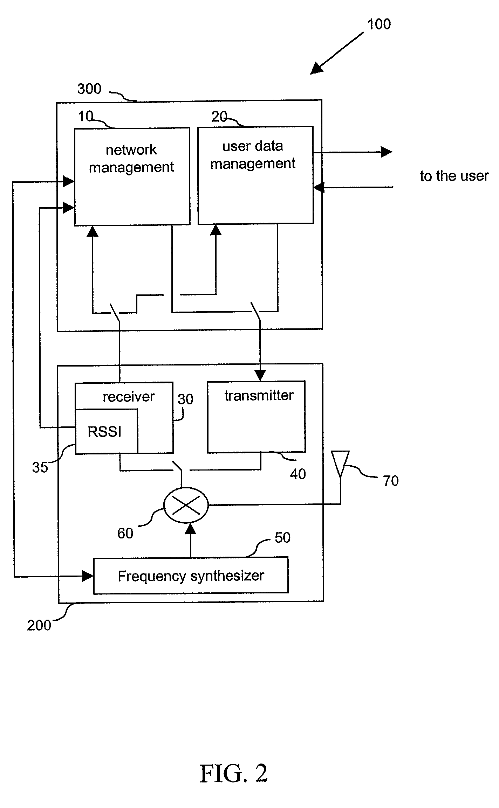

**Figure 2** shows the simplified architecture of an element of a network of the type of the one in Figure 1.

A transmitter-receiver 100 of the network comprises a radio module 200 and a data processing module 300 which contains a user data management module 20 as well as a network management module 10. This management module may create a beacon channel and receive the information from the signaling channel, or else it may create the signaling information and receive the beacon channel.

The radio module contains a frequency synthesizer 50 which is programmable by the network management module 10. This frequency synthesizer, with the aid of a mixer 60, makes it possible to modulate or demodulate the signals coming from
- a radio transmitter module 40, which transforms the binary signals output from the management modules 10 and 20 into a modulatable signal or
- a radio receiver module 30, which transforms the radio frequency signals into binary data understandable by the management modules 10 and 20.

An antenna 70 provides the interface with the outside.

The receiver module 30 contains an RSSI (Received Signal Strength Indicator) 35 which sends an indication to the management module 10.

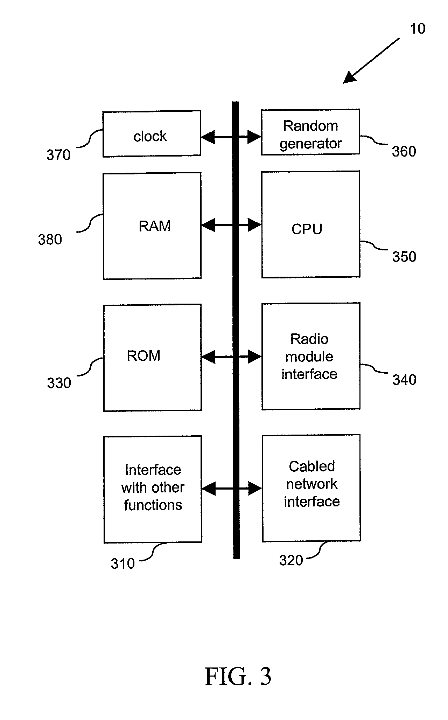

**Figure 3** shows a possible architecture for the network management module 10.

This may be implemented with the use of conventional functions of a microcalculator. A clock 370 makes it possible to have a time base and to create time-outs.

A RAM memory 380 enables a large amount of data to be stored, a ROM memory 330 enables storage of the program to be executed, while a central processing unit 350 enables the sequential execution to be carried out of a certain number of instructions stored in ROM 330 or in RAM 380.

A random generator 360 which, as a variant, may be implemented purely in software form, is necessary. A radio module interface 340 enables the frequency synthesizer 50 to be driven. There may of course be an interface with other functions 310, whose processing it may be wished to integrate, as well as an interface with the wired or cabled network 320 if the member of the network under consideration is an access point.

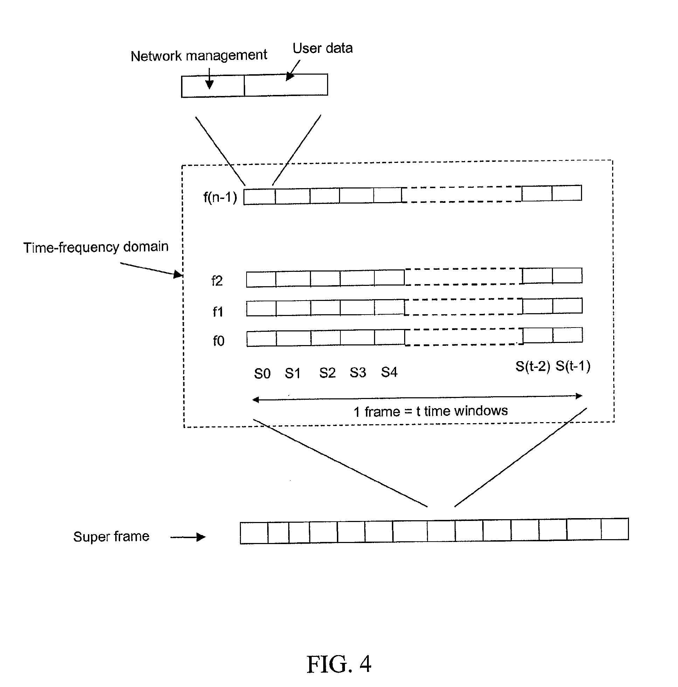

As shown in **Figure 4**, which illustrates the time-frequency domain used by the network, the structure of the network is such that a frame comprises several time windows, it being possible to attribute each window to a member of the network for the transmission of a signal. For each new frame, a given member of the network systematically uses that window until the end of the connection.

In each window used for a link, network management information as well as user data information are transmitted. The entirety of the management information is transmitted over several frames. This group is called a "super frame".

If no link is in course, at least one base station transmits a beacon signal in any window. The beacon signal is repeated in each super frame. It identifies all the windows of the time-frequency domain where the base station is in reception mode. The mobile terminal can thus synchronize itself and, after listening to a super frame, determine which windows or "slots" are free.

The beacon information also contains the identity of the network with in particular an indication about the services that the system supports.

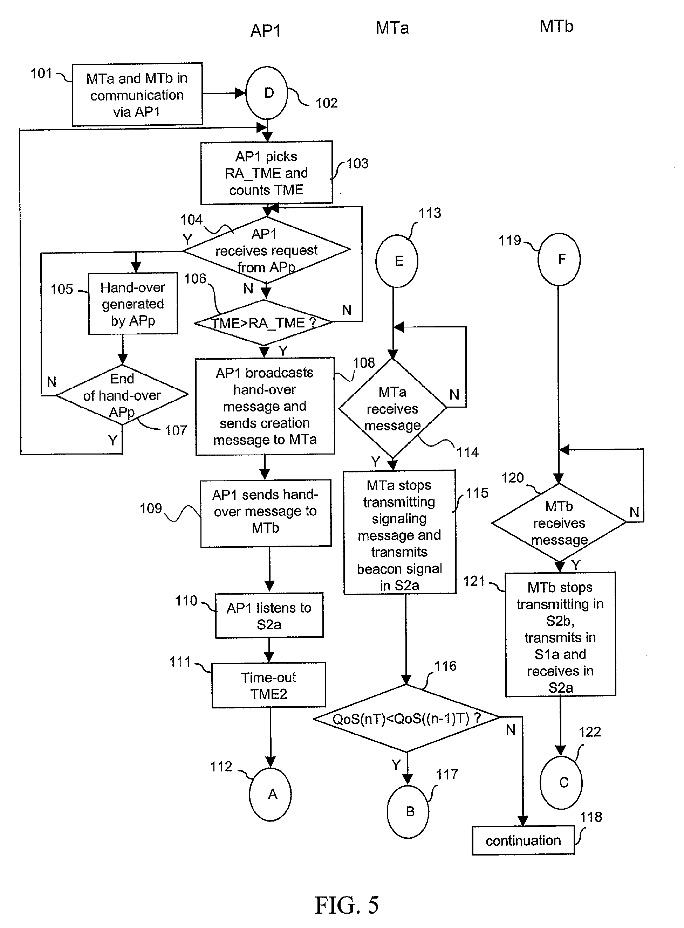

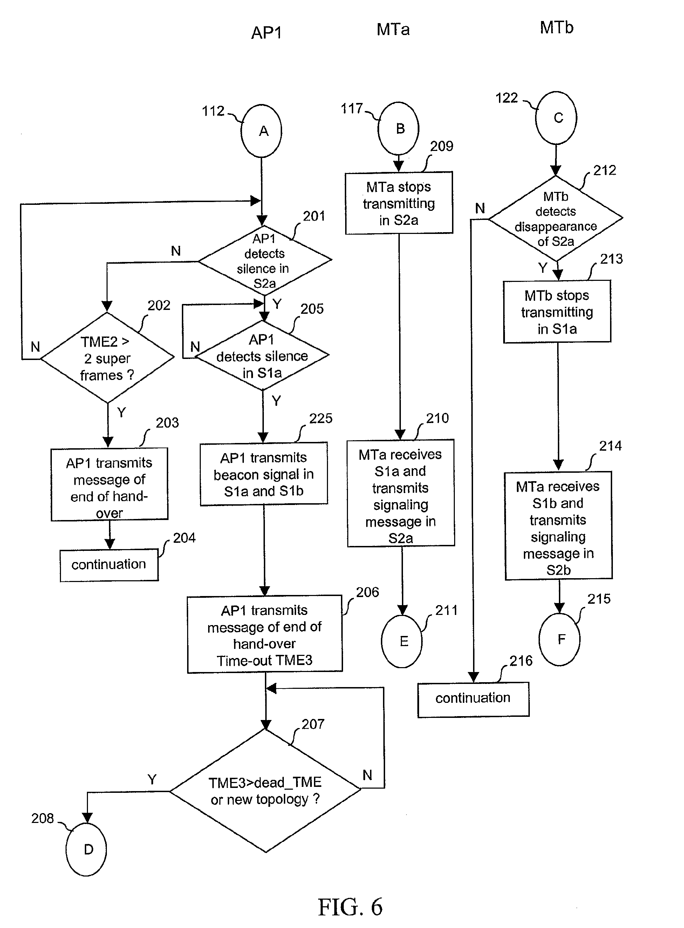

The series of steps carried out by an access point AP1 and two mobile stations MTa and MTb according to the invention are illustrated by Figures 5 and 6, in which the actions of AP1, of MTa and of MTb are placed opposite each other to facilitate reading.

As **Figure 5** shows, the start of the process at step 101 is made as soon as two mobile stations MTa and MTb are in communication together through a same access point AP1.

AP1 then generates a random number RA_TME and stores it, after which a time-out is set running (step 103) and the time TME which passes is monitored at step 106.

During this period of time, AP1 may receive a request from another access point APp which is a member of the network. The request forms part of a hand-over procedure. The arrival of the request is indicated by the test 104. The object of the steps or tests 103, 104, 105, 106 and 107 is to avoid two access points engaging simultaneously in a hand-over procedure, which would be impossible to manage.

If the test 104 becomes positive after the expiration of a period less than RA_TME, this means that a hand-over generated by APp will take priority to proceed. AP1 then replies to the requests of APp (step 105) until reception of a message of end of hand-over from it (step 107).

If the test 106 indicates that a time RA_TME has expired without any other hand-over having priority being signaled, or after the hand-over generated by APp has terminated, AP1 broadcasts a message of end of hand-over in order to limit the evolution of the topology of the network only to the establishment of direct connection of MTa with MTb (step 108).

During the same step, AP1 sends MTa a message of creation of a "child" of the network, that is to say a particular branch of it, inheriting the same properties and characteristics as the rest of the network, and in which MTa will be able to enter into direct communication with MTb, without passing through an access point. This message contains an evaluation of the quality of service (QoS) of the network before the creation of the child as well as a local QoS for the link between AP1 and MTa and a local QoS for the link between AP1 and MTb, then the number of links in course. The QoS values are normalized (that is to say divided) by the number of links in course.

Next, AP1 stops using the time window or windows denoted S1a in which AP1 was transmitting a beacon signal intended for MTa. It does not modify its beacon signal and thus the windows used S1a, S1b, S2a and S2b are not freed for new mobile terminals. Of course, if the windows S1a, S1b, S2a and S2b were the only windows used, then AP1 creates a beacon signal in a window not previously used.

MTa receives the child creation message at step 114. It stops transmitting the signaling message which it was transmitting in the time window or windows denoted S2a. Next, in the windows S2a, it transmits a beacon signal identical to that which it was previously receiving, with the sole difference that the message indicates that no window is available, in order to avoid a terminal that is a candidate for connection taking it for an access point. These actions form step 115.

Meanwhile, AP1 sends a hand-over message to MTb then stops transmitting in the time window or windows S1b (step 109).

When MTb receives this message (test 120), which contains the address of the slots S1a and S2a, MTb uses these addresses to respectively transmit its signaling signal and to receive the beacon signal coming from MTa (step 121).

AP1 still listens to S2a (step 110) and starts a time-out TME2 (step 111), in order to verify that slot S2a is actually used by the mobile stations. For this, it verifies that the slot will again be occupied before expiry of a period of time of two super frames, failing which it takes control of this slot again.

It remains for the base station MTa to verify the success of the sub-network created. This is carried out by measuring the quality of service over the link between MTa and MTb. AP1 has overall knowledge of the quality of service given by the network before the hand-over. It has obtained this information through a series of operations on the statistics coming from the various links of the network. Before the hand-over, the overall number or this series of numbers took into account the links AP1 to MTa and AP1 to MTb. This overall number is communicated to MTa. Next the links AP1 to MTa and AP1 to MTb are cut off; it is thus necessary for MTa to modify the overall number by removing the participations in the previous links.

The overall quality transmitted at the time of creation is thus compared with an addition of that quality with the new normalized QoS minus the values of local QoS's between AP1 and the two mobile terminals (test 116, in which nT designates the current time and (n-1)T designates the preceding time, before creation of the child). For example the quality of service can be defined as the number of bits per second over a link taking into account the power transmitted, while (arbitrarily) giving precedence to the bit rate. By way of non-limiting example, the quality of service QoS can be defined as a weighted sum of these factors: QoS = (80/100) x (throughput used by the link / total throughput possible for a link) + (20/100) x (1 - energy used by the link / total energy available for a link). Thus, if the throughput is nil, the QoS is low if the energy used is high. The QoS is better if the throughput is high for a moderate energy.

The overall QoS of the network is chosen to be equal to an average of the QoS's of each link.

Other choices for defining the QoS are of course possible, using for example fuzzy sets, or threshold logic.

If the new overall QoS of the network is better than the old one, then the hand-over is a success and all MTa has to do is to continue (step 118). Otherwise MTa stops transmitting in slot S2a (step 209 after the connector B 117, in Figure 6).

As **Figure 6** shows, if, in the time equal to the transmission time of two super frames, that is to say a time sufficient for the base station MTa to have obtained a sufficient statistic of the link quality between it and MTb (test 202), AP1 has not seen the beacon signal of MTa stop, it considers the hand-over to be a success and transmits a message of end of hand-over (step 203). The network has then obtained a change of topology and continues its life with a temporary child which will last for the time of connection between MTa and MTb (step 204), thus AP1 modifies its beacon signal to signal the freeing of the groups of windows denoted S1b and S2b. It also modifies its quality indicators since its load is henceforth lower.

In the opposite case, AP1 awaits the loss of the signal in the window S1a (step 205), to again be able to resume the connection with MTa and MTb (step 225). Next, at step 206, AP1 signals the end of the hand-over. It may then for example create a time-out TME3 which will avoid the operation re-starting before a predefined time dead_TME, or else only if a new network topology has been obtained further to a hand-over (step 207). AP1 does not modify its prior parameters; since the hand-over did not take place, the network has returned to it previous topology. The process continues in a loop (connector D 208).

Concurrently, MTa receives the beacon signal from AP1 and resumes the duplex connection using the window or windows S2a (step 210) again. The process continues in a loop (connector E 211, corresponding to connector E 113 of Figure 5).

If MTb does not detect the disappearance of slot S2a (test 212), the communication continues (step 216). In the opposite case, it stops using slot S1a for its transmissions (step 213).

When MTb again receives the beacon signal from AP1 in slot S1b, it can resume the duplex transmission using slot S2b (step 214) again. The process is in a loop (connector F 215, corresponding to connector F 119 of Figure 5).

Thus, by virtue of the present invention, in a hybrid wired and wireless local network, the mobile terminal to mobile terminal communications, when they arise, create a purely wireless child of the local network, if this creation improves the QoS both of the hybrid local network and of the child.

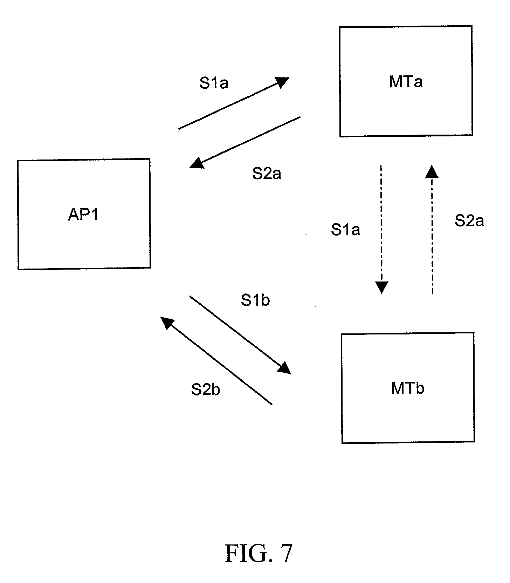

It can be seen in **Figure 7** that before creation of the child, the slots S1a and S2a are respectively used for the communications from the access point AP1 to the mobile station MTa and from the mobile station MTa to the access point AP1 and that the slots S1b and S2b are respectively used for the communications from the access point AP1 to the mobile station MTb and from the mobile station MTb to the access point AP1. After creation of the child, MTa transmits to MTb in slot S1a and MTb transmits to MTa in slot S2a.

## Claims

1. A method for communication in a communication network comprising at least one access point (AP1) and having a wireless part comprising at least first and second mobile stations (MTa, MTb), **characterized in that**, when said first and second mobile stations (MTa, MTb) enter into communication through said access point (AP1), the access point (AP1) broadcasts (108) a message of creation of a temporary sub-network, constituted by the first and second mobile stations (MTa, MTb), in which the first mobile station (MTa) is in direct communication with the second mobile station (MTb), said creation message containing an evaluation of the overall quality of service of the communication network before the creation of said sub-network.

2. A method according to claim 1, **characterized in that**, when the first mobile station (MTa) receives (114) said message of creation of a temporary sub-network, the first mobile station (MTa) stops transmitting (115) a signaling message intended for the access point (AP1) and transmits a beacon signal.

3. A method according to claim 1 or 2, **characterized in that** it further comprises a step according to which the access point (AP1) sends (109) a hand-over message to the second mobile station (MTb).

4. A method according to claim 2 or 3, **characterized in that** the first mobile station (MTa) determines, from the evaluation of the quality of service contained in said sub-network creation message, whether the overall quality of service of the communication network after the creation of the sub-network is better than the overall quality of service of the communication network before the creation of the sub-network.

5. A device for communication in a communication network comprising at least one access point (AP1) and having a wireless part comprising at least first and second mobile stations (MTa, MTb), **characterized in that** the access point (AP1) comprises means for broadcasting, when said first and second mobile stations (MTa, MTb) enter into communication through said access point (AP1), a message of creation of a temporary sub-network, constituted by the first and second mobile stations (MTa, MTb), in which the first mobile station (MTa) is in direct communication with the second mobile station (MTb), said creation message containing an evaluation of the overall quality of service of the communication network before the creation of said sub-network.

6. A device according to claim 5, **characterized in that** the first mobile station (MTa) comprises means for stopping to transmit a signaling message intended for the access point (AP1) and for transmitting a beacon signal, when the first mobile station (MTa) receives (114) said message of creation of a temporary sub-network from said access point (AP1).

7. A device according to claim 5 or 6, **characterized in that** the access point (AP1) further comprises means for sending a hand-over message to the second mobile station (MTb).

8. A device according to claim 5, 6 or 7, **characterized in that** the first mobile station (MTa) comprises means for determining, from the evaluation of the quality of service contained in said sub-network creation message, whether the overall quality of service of the communication network after the creation of the sub-network is better than the overall quality of service of the communication network before the creation of the sub-network.

9. A microcontroller, **characterized in that** it comprises means adapted to implement a communication method according to any one of claims 1 to 4.

10. A microcontroller, **characterized in that** it comprises a communication device according to any one of claims 5 to 8.

11. An FPGA (Field Programmable Gate Array), **characterized in that** it comprises means adapted to implement a communication method according to any one of claims 1 to 4.

12. An FPGA (Field Programmable Gate Array), **characterized in that** it comprises a communication device according to any one of claims 5 to 8.

13. A mobile station in a communication network, **characterized in that** it comprises means adapted to implement a communication method according to any one of claims 1 to 4.

14. A mobile station in a communication network, **characterized in that** it comprises a communication device according to any one of claims 5 to 8.

15. An access point in a communication network, **characterized in that** it comprises means adapted to implement a communication method according to any one of claims 1 to 4.

16. An access point in a communication network, **characterized in that** it comprises a communication device according to any one of claims 5 to 8.

17. A communication network, **characterized in that** it comprises means adapted to implement a communication method according to any one of claims 1 to 4.

18. A communication network, **characterized in that** it comprises a communication device according to any one of claims 5 to 8.

19. A digital signal processing apparatus, **characterized in that** it comprises means adapted to implement a communication method according to any one of claims 1 to 4.

20. A digital signal processing apparatus, **characterized in that** it comprises a communication device according to any one of claims 5 to 8.
